# EUROPÄISCHE PATENTANMELDUNG

(11) **EP 1 903 010 A1**
(43) Veröffentlichungstag der Anmeldung: **26.03.2008**
(21) Anmeldenummer: 06019907.2
(22) Anmeldetag: 22.09.2006
(51) Int. Cl.: C02F 3/30

(54) **Verfahren zur Abwasserbehandlung in kontinuierlich beschickten Belebtschlammanlagen mit vorgeschalteter Denitrifikation**

(71) Anmelder: Holm, Niels Christian, 32425 Minden (DE); Rönner-Holm, Sabine, 32425 Minden (DE); Universität Wien, 1010 Wien (AT)
(72) Erfinder: Holm, Christian, 32425 Minden (DE)
(74) Vertreter: Tönnies, Jan G.

(57) **Zusammenfassung**

Verfahren zur Abwasserbehandlung in Belebtschlammkläranlagen mit vorgeschalteter Denitrifikation, bei dem die kontinuierliche Zufuhr zur Biologie in einander abwechselnden Phasen mit erhöhten und erniedrigten Zufuhrraten erfolgt, wobei die reduzierte Zufuhrrate 10 - 70 % der Rohwasserzulaufrate beträgt, die erhöhte Zufuhrrate 100 - 300 % der Rohwasserzulaufrate beträgt, und die Phasen mit erhöhter und die mit reduzierter Zufuhrrate jeweils 0,5 - 3,0 Stunden betragen.

## Beschreibung

Die Erfindung betrifft ein Verfahren zur Abwasserbehandlung in kontinuierlichen Belebtschlammkläranlagen mit vorgeschalteter Denitrifikation.

Bei solchen Verfahren erfolgt ein kontinuierlichen Rohwasserzulauf (mit oder ohne Vorklärung) in ein vorgeschaltetes Denitrifikationsbecken, dem ein oder mehrere hintereinandergeschaltete Nitrifikationsbecken (aus denen die interne Rezirkulation in die vorgeschaltete Denitrifikation erfolgt) nachgeschaltet sind sowie abschließend eine Nachklärung, aus der der Rücklaufschlamm zurück in die Denitrifikation gefördert wird. Diese Anlagenkonzeption kann für alle Gewerke oder nur einige Gewerke einstraßig oder mehrstraßig sein.

Dieses Verfahren mit all seinen aller Varianten wie ein zusätzlich vorgeschaltetes Anaerobbecken, das Kaskadendenitrifikationsverfahren etc., ist das weltweit verbreitetste Belebtschlammverfahren. Insbesondere mittelgroße und große Kläranlagen werden fast nur nach diesen Verfahren betrieben.

Richtig dimensioniert und betrieben ergibt sich mit diesen Verfahren praktisch immer
1) eine vollständige Nitrifikation (d.h. meistens NH₄-N Ablauf = 0 mg/l),
2) eine in gewissen Grenzen mittels der Rezirkulation einstellbare Denitrifikationsrate bis ca. 80 % (d.h. meistens N0₃-N Ablauf zwischen 5 - 20 mg/l),
3) eine begrenzte biologische Phosphor-Elimination, wenn entsprechende zusätzliche Vorrichtungen wie ein vorgeschaltetes Anaerobbecken realisiert sind, die Denitrifikation und biologische P-Elimination können daher (oft nur mit bedeutenden Zusatzaufwendungen) nur innerhalb verfahrensspezifischer Grenzen realisiert werden.

Ein weiterer Schwachpunkt, der Schlammindex ISV, ein Maß für die Absetzgeschwindigkeit des Belebtschlammes, ist der wichtigste Auslegungs- und Betriebsparameter.

Bei sehr vielen kommunalen, industriellen und gewerblichen Abwasserreinigungsanlagen sind in den letzten Jahrzehnten eine Vielzahl von speziellen Verfahrensschritten entwickelt und realisiert worden, um die Auswirkungen auf den Schlammindex gezielt untersuchen zu können, siehe z.B. [1]. In allen diesen Fällen ist es dabei das vorrangige Ziel gewesen, Prozessbedingungen zu "finden", die zu einem stabil niedrigen Schlammindex führen.

Dies ist ökonomisch sehr vorteilhaft, da die Höhe des Schlammindexes über die Höhe der betreibbaren Belebtschlammkonzentration und/oder der hydraulischen Durchsatzkapazität entscheidet und somit der entscheidende Parameter für die Anlagengröße der Belebungs- und Nachklärbecken ist. Außerdem ist ein stabil niedriger Schlammindex ökologisch sehr vorteilhaft, da überwiegend nur bei hohen Schlammindizes erhebliche Probleme wie Schwimm- und Blähschlammbildung auftreten.. Diese Schlammfraktionen mit vergleichsweise hohem Schlammindex treiben oft über die Nachklärung unkontrolliert in die Vorfluter ab und verursachen dort erhebliche, ggf. ein Fischsterben verursachende Gewässerverunreinigungen.

Zudem führen erhöhte Schlammabtriebe zu entsprechend erhöhten Ablaufkonzentrationen, insbesondere des abwasserabgabepflichtigen Parameters CSB (chemischer Sauerstoff Bedarf). Daraus resultieren dann höhere Abwasserabgabekosten und ggfl. auch Bußgelder.

Der heutige Kenntnisstand hinsichtlich der den Schlammindex beeinflussenden allgemeinen Faktoren nach dem ATV Arbeitsblatt A 131 [2] und dem Merkblatt M 210 [3] lässt sich wie folgt zusammenfassen: Je nach Art der gewerblichen Einflüsse können günstige oder ungünstige Auswirkungen auf den Schlammindex auftreten. Beispielsweise wirken sich Weinbauabwässer oft ungünstig aus. Auch niedrigere Schlammalter wirken sich oft ungünstig auf den Schlammindex aus. Betriebsweisen mit stoßweiser Beschickung nach dem "plug flow" bzw. "feast/famine" Prinzip (im Gegensatz zu kontinuierlich beschickten, volldurchmischten Anlagen, kbvA), beispielsweise mittels mehrerer hintereinander geschalteter Belebungskaskaden, wirken sich dagegen überwiegend positiv auf den Schlammindex aus. Grundsätzlich gilt aber, dass selbst bei Realisierung vieler oder aller positiven Faktoren auch hohe Schlammindizes resultieren können und manchmal auch niedrige Schlammindizes unter ungünstigen Bedingungen auftreten.

Auch eine Reihe von speziellen Faktoren, wie anaerobe, anoxische und aerobe Selektoren und Zugabe unterschiedlicher Fäll- und Flockungsmittel sind in ihren Auswirkungen auf den Schlammindex untersucht worden. Manchmal wurden positive und manchmal negative Auswirkungen festgestellt. Wiederum konnte in keinem Fall generell positive Auswirkungen festgestellt werden: Was bei einigen Anlagen zu einer Verringerung des Schlammindexes führte, bewirkte bei anderen Anlagen nahezu nichts und wirkte sich bei einigen sogar negativ aus.

Generell lässt sich feststellen, dass "feast/famine" Bedingungen sich oft günstig auf den Schlammindex auswirken. Das steht in Übereinstimmung mit der sogenannten "Kinetic Selection Theorie", wonach mikrobielle r-Strategen (im Gegensatz zu den filamentösen Bakterien, die im Allgemeinen einen höheren Schlammindex implizieren und als K-Strategen gelten) bei feast/famine Bedingungen positiv selektioniert werden.

Vergleichende molekularbiologische Untersuchungen der Populationsstruktur nitrifizierender Bakterien an feast/famine und kbvA haben zudem gezeigt, dass die Diversität der Nitrifikanten bei feast/famine Anlagen deutlich höher ist (4, 5). Eine hohe Diversität verschiedener, aber funktionell ähnlicher Bakterien (z.B. mehrere Ammoniakoxidierer-Stämme oder -Arten) kann sich positiv auf die Störanfälligkeit einer Anlage auswirken: Im Falle einer unvorhergesehenen Änderung der Bedingungen in der Anlage besteht bei hoher Diversität eine große Wahrscheinlichkeit, dass mindestens eine der vorhandenen Bakterienpopulationen (im Beispiel: einer der Ammoniakoxidierer-Stämme) unter den neuen Bedingungen aktiv bleiben kann. Bei niedriger Diversität (z.B. nur ein Ammoniakoxidierer im System) hingegen kann es passieren, dass diese Population unter den veränderten Bedingungen inaktiv ist und der Reinigungsprozess somit zum erliegen kommt. Wenn die Bakterien, wie im Falle der Nitrifikanten, auch noch langsam wachsen, dauert es unter Umständen sehr lange, bis die Populationen sich wieder erholt haben und der Prozess erneut anläuft. Die feast/famine Strategie zielt auf eine Erhöhung der bakteriellen Diversität in einer Anlage ab, und zwar in allen für die Abwasserreinigung relevanten funktionellen Gruppen (also nicht nur in Bezug auf die Nitrifikation, welche hier lediglich als Beispiel zur Darstellung des Prinzips dient). Aufgrund der zyklisch geänderten Bedingungen entstehen ökologische Nischen für zusätzliche Bakterienarten, welche sich in der Anlage ansiedeln und stabile Populationen bilden können. Daraus lässt sich unmittelbar ableiten, dass feast/famine Anlagen in der Lage sein dürften, Störeinflüsse deutlich robuster abzupuffern als kbvA.

Eine niedrige Diversität in kbvA scheint sogar für den zweiten Schwachpunkt mitverantwortlich sein: Hohe Diversitäten dürften einem "Umkippen" in Richtung eines hohen Schlammindexes eher entgegenwirken.

Ein letzter problematischer Aspekt von kbvA ergibt sich aus der Auslegung der Nachklärbekken auf den maximalen Mischwasserzufluss Qₘ, zwischen deren Auftreten allerdings oft lange Zeiträume von mehreren Monaten liegen können. In der Zwischenzeit liegt der maximale Zulauf (und somit auch Zulauf in die Nachklärung) meistens weit unter der Hälfte von Qₘ. Die Kapazität der Nachklärung wird während dieser Zeit daher nur geringfügig in Anspruch genommen: In dieser Zeit ist der Selektionsdruck auf die Absatzgeschwindigkeit der Belebtschlammflocken stark eingeschränkt; auch sich langsam absetzende Flocken (mit vielen fädigen Bakterien) werden in der hydraulisch nur unterbelasteten Nachklärung noch genügend Zeit zur Sedimentation haben, gelangen in den Rücklaufschlamm und können sich in der Belebung sogar anreichern. Beim nächsten Spülstoß werden sie zwar überwiegend aus der Nachklärung in den Ablauf "rausgewaschen", aber dann ist der Schaden schon aufgetreten.

Aufgabe der Erfindung ist es deshalb, ein Verfahren bereit zu stellen, bei dem alle vier oben aufgeführten Schwachpunkte
a) begrenzte Denitrifikationskapazität
b) begrenzte biologische P-Elimination
c) schwankender, oft hoher Schlammindex
d) geringe Pufferkapazität gegen Störeinflüsse (z.B. störanfällige Nitrifikation) überwunden werden.

Die Erfindung wird gelöst durch ein Verfahren mit den Merkmalen des Anspruchs 1, die Unteransprüche geben bevorzugte Ausgestalten dieses Verfahrens an.

Die Phasen mit reduzierten Zufuhren in die Biologie betragen 0,5 - 3,0 Stunden. Es erfolgen während dieser Zeit Reduktionen auf 10 - 70 % des Rohwasserzulaufes. Die Phasen mit erhöhten Zufuhren betragen wiederum 0,5 - 3,0 Stunden. Es erfolgen während dieser Zeit Erhöhungen auf 100 - 300 % des Rohwasserzulaufes. Zwischen diese beiden Phasen kann auch eine Phase mit einer der Rohwasserzufuhrrate entsprechender Zufuhrrate zwischengeschaltet sein.

Bei einstraßigen Anlagen wird diese neue Verfahrenstechnik realisiert durch Vorschaltung eines Pufferbehälters in der erforderlichen Größenordnung: Der Zulauf wird (beispielsweise mit Hilfe eines Elektroschiebers) auf die gewünschte Reduktion herruntergeregelt und der überschüssige Zulauf im Puffer zwischengespeichert. Mit Beginn der erhöhten Zufuhr wird diese zwischengespeicherte Menge in den Zulauf zurückgefördert. Für diesen Fall (einer Einstraßigkeit) muss allerdings darauf geachtet werden, dass der erhöhte Zulauf nicht den Auslegungs- Qmax (bzw den tatsächlich aktuell verkraftbaren Qm) überschreitet, das sonst die Nachklärung überlastet wird.

Bei mehrstaßigen (n) Anlagen können (wiederum mit Hilfe von elektrischen Schiebern) die Mengenaufteilung sich in entsprechenden Zeitabständen verschieben. Nur wenn jede Belebungsstraße mit dem quasi "eigenem" Nachklärbecken fest verbunden ist, muss auch hier gewährleistet werden, dass der erhöhte Zulauf nicht Qm/n überschreitet, ansonsten unterliegen Zulauferhöhungen keinen Grenzen.

Beispiel: Anlage mit vorgeschalteter Denitrifikation mit drei Straßen mit einem Rohabwasserzulauf Qak und normaler Aufteilung auf die drei Straßen von Qak/3:

3 Straßen werden mit einer Asynchronität von ie 60 min betrieben:

| Zeit, h | 0 | 3 | 6 | 8 | 11 |
|---|---|---|---|---|---|
| Straße 1: | 111133332222 | 111133332222 | 11113333 | *2222*11113333 | *2222* |
| Straße 1: | *2222*11113333 | *2222*1111*3333* | *2222*111133 | 33*2222*1111 | 3333 |
| Straße 1: | 3333*2222*1111 | *33332222*111133 | *332222*1 | 1113333*2222*1 | 111 |

11: Reduzierter Zulauf auf 0,1 x Qak/3
33: Erhöhter Zulauf auf 0,9 x Qak/3
22: Normaler Zulauf auf Qak/3

Wie unschwer zu erkennen ist, läuft insgesamt Qak zu.

Während der Phasen mit reduzierter Zufuhr in die Biologie sollte diese nicht auf unter 10 % eingestellt des Rohwasserzulaufs werden. Diese Phase soll im Wesentlichen dafür genutzt werden, das gesamte im System (d.h. im Wesentlichen im Nachklärbecken und in den Nitrifikationsbecken) befindliche Nitrat weitestgehend zu denitrifzieren. Dafür wird eine gewisse Mindestmenge an "frischer" Zufuhr benötigt.

Nach einer bevorzugten Ausführungsform der Erfindung wird während dieser Phase der reduzierten Zufuhr die Rücklaufschlammmenge nicht auf die reduzierte Zuführmenge runtergeregelt (wo dies möglich ist), sondern auf einen höheren Wert x: Qak/2 < x < Qak, um die Gesamt-Denitrifikationsrate zu maximieren (gilt nur für einstraßige Systeme, mehrstraßigen Systemen, bei denen jeder biologischen Straße ein Nachklärbecken fest zugeordnet ist und solchen Systemen, bei denen der Rücklaufschlamm individuell auf jede biologische Straße verteilt werden kann).

Nach Ende dieser Phase werden die NO₃-N Konzentrationen in den Nitrifikationsbecken und Nachklärbecken weit unterhalb der minimal möglichen Werte "normaler" vorgeschalteter Denitrifikationsanlagen liegen.

Nach einer weiteren bevorzugten Ausführungsform der Erfindung wird während dieser Phase der reduzierter Zufuhr
A: bei einem einstufigen Nitrifikationsbecken nur noch sehr reduziert belüftet, entweder intermittierend oder NH₄-N geregelt oder O₂ geregelt, und
B: bei einem mehrstufigen Nitrifikationsbecken die letzte Stufe gar nicht belüftet und die vorgeschalteten Stufen wie nach A.

Nach Ende dieser Phase werden die NH₄-N Konzentrationen im Denitrifikationsbecken weit unterhalb der minimal möglichen Werte "normaler" vorgeschalteter Denitrifikationsanlagen liegen. Es versteht sich von selbst, dass während dieser Phase die interne Rezirkulation gänzlich außer Betrieb bleiben kann.

Am Ende der Phase reduzierter Zufuhr liegen somit in allen Einzelstufen extrem geringe NO₃-N und NH₄-N Konzentrationen vor, d.h. ausgeprägte "famine" (Hunger) Bedingungen.

Mit Beginn der erhöhten Zufuhr wird die "normale" Rücklaufschlamm Regelung/Steuerung wieder aktiviert. Nach einer bevorzugten Ausführungsform der Erfindung wird während der ersten x min dieser Phase: 10 min < x < 60 min, allerdings nicht belüftet. Damit wird erreicht, dass
1) die Denitrifikation (insbesondere im Nitribecken und der Nachklärung) noch weiter fortgeführt wird.
2) im vorgeschalteten Denitrifikationsbecken ausgeprägt anaerobe Verhältnisse erzielt werden, was dort eine Phosphor-Rücklösung bewirken wird, die Vorraussetzung für die unter den nachfolgenden oxischen Bedingungen erfolgende erhöhte Phosphor Aufnahme.
3) es im Nitrifikationsbecken zu einem gewissen NH₄-N Anstieg kommt, der allerdings selbstverständlich nicht über den zugelassenen NH₄-N Ablaufwert steigen darf.

Nach Ablauf der x min und/oder Überschreitung eines gewählten NH₄-N Wertes im Nitrifikationsbecken wird die Belüftung wieder angeschaltet. Damit liegen zu dieser Zeit in der Denitrifikation und auch in der Nitrifikation hinsichtlich NH₄ und auch CSB und BSB ausgeprägte "feast" (Sättigungs-) Bedingungen vor.

Dieser zyklische feast/famine Wechsel der Bedingungen wirkt sich bekanntermaßen günstig auf den Schlammindex aus. Des Weiteren erfolgt damit ein positiver Selektionsdruck in Richtung erhöhte Diversität der Mikroorganismen mit günstigen Auswirkungen auf die Pufferkapazität gegenüber tatsächlichen Störeinflüssen bzw. Überlastbedingungen.

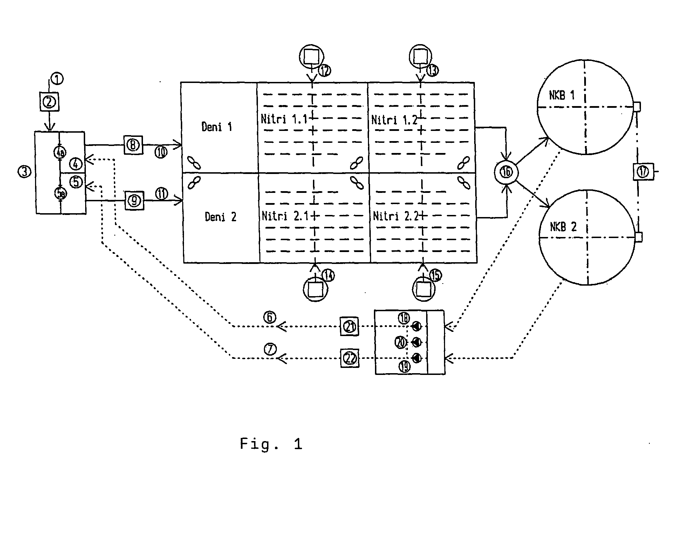

Am Beispiel einer zweistrassigen Anlage, siehe Fig. 1, wird eine mögliche Prozessabfolge erläutert:

Der Zulauf 1 zur Biologie erfolgt über eine Zufuhrmengenmessung 2 in den Vorschacht eines Verteilers 3. Die Weiterleitung in die beiden Kammern 4 und 5 wird über die beiden Regelorgane 4a und 5a mengen-geregelt. Aus der Kammer 4 erfolgt die Weiterleitung über die Mengenmessung 8 in das Denitrifikationsbecken 1 (Deni 1) der ersten Straße und aus der Kammer 5 über die Mengenmessung 9 in das Denitrifikationsbecken 2 (Deni 2) der zweiten Straße. Nach Durchfluss der jeweils 2-stufigen Nitrifikationsbecken (wobei jedem Nitri-Becken jeweils ein Gebläse 12, 13, 14 und 15 zugeordnet sind) erfolgt über den Verteiler 16 die Aufteilung auf die beiden Nachklärbecken (NKB 1 und 2). Über den Ablaufschacht 17 erfolgt die Klarwasserableitung in die Vorflut.

Der Rücklaufschlamm wird über die RS-Pumpen 18, 19 (Reserve) und 20 in den Verteiler 3 zurückgefördert. Dabei ist die RS-Pumpe 18 über die Mengenmessung 21 und der Leitung 6 direkt der Kammer 4 (d.h. Straße 1) zugeordnet und die RS-Pumpe 19 ist über die Mengenmessung 22 und der Leitung 7 direkt der Kammer 5 (d.h. Straße 2) zugeordnet.

Für die Abfolgen reduzierter und erhöhter Zufuhr sind jeweils 1,5 Stunden gewählt, d.h. die beiden Straßen werden mit einem Versatz von 1,5 Stunden betrieben, da keine "Normal"-Zufuhr-Phase zwischengeschaltet ist.

Bei t₀ = 0 h beginnt Straße 1 mit der Phase reduzierter Zufuhren (und gleichzeitig Straße 2 mit erhöhter Zufuhr). Durch Abgleich der Zufuhrmenge 2 mit der Rücklaufschlammmenge 21 wird der Zulauf in die Straße 1 über das Regelorgan 4a so eingestellt, das über die Zulaufmengenmessung 8 und der Leitung 10 in die Straße 1 sich ein Wert ergibt, der impliziert, dass nur 10 % der über 2 gemessenen aktuellen Zufuhrmenge in die Kammer 4 geführt wird (was automatisch bedeutet, dass 90 % in die Kammer 5 geführt wird). Dabei werden die beiden Rücklaufschlammmengen 21 und 22 unverändert über die Zufuhrmenge geregelt.

Im Verlaufe der nächsten 1,5 Stunden wird das in der Straße 1 befindliche Nitrat weitgehend denitrifiziert. Auf Grund der stark reduzierten Zufuhr kann während der ganzen nächsten 1,5 h die Belüftung in Nitri 1.2 abgestellt bleiben. Deshalb wird auch die Belüftung in Nitri 1.1 nur noch in reduzierter Form erfolgen, wobei allerdings gewährleistet ist, dass die in Nitri 1 geführte NH₄-N Fracht vollständig nitrifiziert wird. Dadurch werden die in Straße 1 befindlichen Gesamtmengen an NO₃ und NH₄ stark reduziert werden.

Nach Ablauf der ersten 1,5 h erfolgt die Umstellung auf erhöhten Zufuhr (90 % des Zufuhr über 2) in analoger Weise über die drei Mengenmessungen 2, 8 und 21 und dem Regelorgan 4a.

Da in Deni 1 die NH₄ Konzentrationen deutlich unter dem beim "normalen" vorgeschalteten Denitrifikationsverfahren gesunken sind, verbleibt für die ersten x min (z.B. x = 20 min) die Belüftung in Nitri 1.1 und 1.2 ausgeschaltet. Hierbei handelt es sich (nebst der phasenweise reduzierten und erhöhten Abwasserzufuhr) um den zentralen Schritt dieser neuen Verfahrensvariante, der zu "feast" Bedingungen in Deni 1 und Nitri 1.1 führt, ohne dass in Nitri 1.2 Grenzwerte überschritten werden.

Nach Ablauf der x min und/oder nach Überschreitung eines frei gewählten aktuellen NH₄-N Wertes in Nitri 1.2 wird die Belüftung in Nitri 1.1 und 1.2 mittels der Gebläse 12 und 13 wieder aktiviert. Gebläse 12 und 13 können auch nach einem frei wählbaren Zeitversatz aktiviert werden.

Bei t₂ = 3 h beginnt der Zyklus von neuem mit reduzierter Zufuhr in die erste Straße.

Nach Ende der erhöhten Zufuhr wird im vorgeschaltetem Denibecken NH₄-N Konzentrationen vorliegen, die deutlich über den maximal möglichen beim "normalen" vorgeschalteten Denitrifikationsverfahren liegen. Da allerdings diese erhöhte Zufuhr Belebungsbeckeninhalt mit sehr geringen NO₃-N und NH₄-N Konzentrationen "vor sich her" geschoben hat, wird selbst am Ende diese Phase erhöhter Zufuhr die Nitrat-Konzentration im Ablauf aus Nitri 1.2 nicht überdurchschnittlich erhöht sein.

Die durchschnittlichen NH₄-N und TKN Konzentrationen der Zufuhr sowie die durchschnittliche hydraulische Verweildauer (der Zufuhr) in der Biologie werden die optimalen Längen der Phasen reduzierter und erhöhter Zufuhr bestimmen: Je höher die TKH/NH4-N Konzentrationen sind und je geringer die durchschnittliche hydraulische Verweildauer in der Biologie ist, je kürzer müssen die Phasen werden.

Die Vorteile des Verfahrens ergeben sich unmittelbar aus den obigen Ausführungen:
1) Die Nitrat-Ablaufwerte werden signifikant gesenkt.
2) Am Beginn der Phasen mit erhöhter Zufuhr (und ohne Belüftung) werden in der vorgeschalteten Denitrifikation anaerobe Zustände realisiert, damit wird die biologische P-Elimination deutlich verbessert und als Folge davon der Fällmittelbedarf reduziert.
3) Die zyklisch abwechselnden feast/famine Zustände wirken sich auf den Schlammindex positiv aus. Dieser positive Selektionsdruck wird noch dadurch verstärkt, dass die Nachklärung in zyklischen Abständen (zumindestens bei einigen Ausführungsvarianten) hydraulisch künstlich hoch beaufschlagt wird.
4) Die feast/famine Zustände bewirken eine Erhöhung der bakteriellen Diversität. Das erhöht die Pufferkapazität gegenüber Störeinflüssen. Diese wird zudem dadurch verbessert, dass die Belebtschlammpopulationen zyklisch kontrollierten Änderungen der Wachstumsbedingungen ("kontrollierten Störungen") ausgesetzt werden.

### Literatur

[1] Irvine, R.L., Ketchum Jr., L.H.: Sequencing Batch Reactor for Biological Wastewater Treatment. CRC Crit. Rev. Environ. Control, 1988,18, 255.
[2] ATV - A 131: Bemessung von einstufigen Belebungsanlagen ab 5.000 Einwohnerwerten. GFA, St.Augustin, Mai 2000.
[3] ATV - M 210: Belebungsanlagen mit Aufstaubetrieb. Gesellschaft zur Förderung der Abwassertechnik e.V. (GFA), Hennef, 1997.
[4] Daims, H., Purkhold, U., Bjerrum, L., Arnold, E., Wilderer, P.A. and Wagner, M. (2001) Nitrifiaktion in sequencing biofilm batch reactors: lessons from molecular approaches. Water Sci Technol 43, 9-18
[5] Juretschko, S., Timmermann, G., Schmid, M., Schleifer, K.-H., Pommerening-Röser, A., Koops, H.-P. and Wagner, M (1998) Combined molecular and conventional analyses of nitrifying bacterium diversity in activated sludge: Nitrosococcus mobiles and Nitrospira-like bacteria as dominant populations. Appl Environ Microbial 64, 3042-3051.

## Patentansprüche

1. Verfahren zur Abwasserbehandlung in Belebtschlammkläranlagen mit vorgeschalteter Denitrifikation, bei dem die kontinuierliche Zufuhr zur Biologie in einander abwechselnden Phasen mit erhöhten und erniedrigten Zufuhrraten erfolgt,
**dadurch gekennzeichnet, dass**
die reduzierte Zufuhrrate 10 - 70 % der Rohwasserzulaufrate beträgt,
die erhöhte Zufuhrrate 100 - 300 % der Rohwasserzulaufrate beträgt, und
die Phasen mit erhöhter und die mit reduzierter Zufuhrrate jeweils 0,5 - 3,0 Stunden betragen.

2. Verfahren nach Anspruch 1, **dadurch gekennzeichnet, dass** bei einstraßigen Anlagen der Zulauf mit reduzierten bzw. erhöhten Zufuhrraten aus einem vorgeschalteten Pufferbehälter erfolgt, aus dem die Zufuhr auf die gewünschte Zufuhrrate runtergeregelt und der überschüssige Rohwasserzulauf im Pufferbehälter zwischengespeichert wird und bei der erhöhten Zufuhrrate die zwischengespeicherte Menge zusätzlich weitergefördert wird.

3. Verfahren nach Anspruch 1, **dadurch gekennzeichnet, dass** bei mehrstraßigen Anlagen die Zufuhrraten der einzelnen Zufuhren in die einzelnen Strassen zeitlich versetzt eingestellt werden, so dass die Gesamtzufuhr jeweils dem Rohwasserzulaufs entspricht.

4. Verfahren nach Anspruch 1, **dadurch gekennzeichnet, dass** zwischen den Phasen mit erhöhter und mit reduzierter Zufuhrrate und/oder mit reduzierter und mit erhöhter Zufuhrrate eine Phase mit der einer durchschnittlichen Zufuhrrate zwischengeschaltet wird.

5. Verfahren nach Anspruch 1, **dadurch gekennzeichnet, dass** die Biologie erst 10 - 60 min nach Beginn der Phase mit erhöhter Zufuhrrate belüftet wird.

6. Verfahren nach Anspruch 1 und 5, **dadurch gekennzeichnet, dass** die Biologie während der Phase mit erhöhter Abwasserzufuhr erst nach Überschreitung eines frei gewählten NH₄-N Wertes in dem oder im letzten Nitrifikationsbecken belüftet wird.
